# EUROPEAN PATENT APPLICATION

(11) **EP 2 175 150 A1**
(43) Date of publication of application: **14.04.2010**
(21) Application number: 08764757.4
(22) Date of filing: 27.05.2008
(51) Int. Cl.: F16C 27/02

(54) **FOIL BEARING DEVICE**

(30) Priority: 10.08.2007 JP 2007209976
(71) Applicant: IHI Corporation, Tokyo 135-8710 (JP)
(72) Inventor: ISHIMOTO, Koushi, Tokyo 135-8710 (JP)
(74) Representative: Grünecker, Kinkeldey, Stockmair & Schwanhäusser Anwaltssozietät
(86) International application number: PCT/JP2008/059729
(87) International publication number: WO 2009/022487

(57) **Abstract**

There are provided a rotational shaft 2, a bearing inner ring 3 which is pressed into the outer periphery of the rotational shaft 2, a foil 4 which is disposed in the outer periphery of the bearing inner ring 3, and a bearing outer ring 5 which is formed in the outer periphery of the foil 4, where the bearing inner ring 3 is provided with a pair of foil displacement regulating portion 6 and 7 which regulates an axial displacement of an inner peripheral side 4a of the foil 4.

## Description

### BACKGROUND OF THE INVENTION

### Technical Field of the Invention

The present invention relates to a foil bearing apparatus which includes a thin plate-shaped foil disposed in the outer periphery of a rotational shaft, and a bearing outer ring disposed in the outer periphery of the foil, and which rotatably supports the rotational shaft without oil by forming an air layer between the rotating rotational shaft and the foil.

### Description of the Related Art

Since this kind of foil bearing apparatus is capable of supporting a rotational shaft rotating at a high speed without supplying oil, the bearing apparatus is suitably used in a turbo compressor, a turbo charger, a gas turbine, and the like.

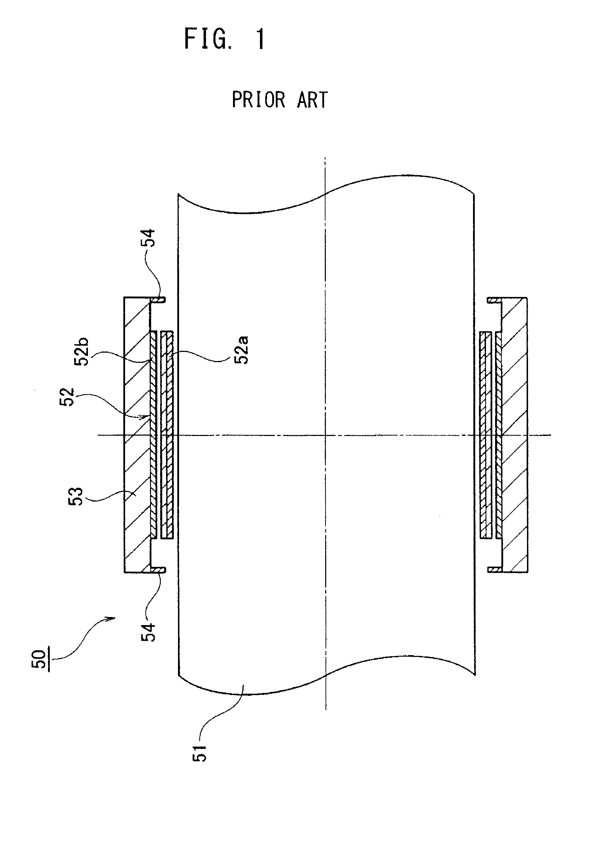

As shown in Fig. 1, a conventional foil bearing apparatus 50 includes a rotational shaft 51, a foil 52 which is wound on the outer periphery of the rotational shaft 51 plural times, and a bearing outer ring 53 which is disposed in the outer periphery of the foil 52. Both ends of the bearing outer ring 53 are provided with a pair of stoppers 54 and 54 so as to prevent the foil 52 from protruding in the axial direction.

When the rotational shaft 51 is rotated, an air layer is formed between the rotational shaft 51 and the foil 52. By using the air layer as a lubricating layer, the foil bearing apparatus 50 rotatably supports the rotational shaft 51 without using oil. In addition, when an outer peripheral side 52b of the foil 52 is about to be displaced in the axial direction by the disturbance or the like, both axial displacements of the outer peripheral side 52b of the foil 52 are regulated by stoppers 54 and 54. Accordingly, it is possible to prevent a problem caused by the axial displacement of the outer peripheral side 52b of the foil 52.

In addition, Patent Document 1 discloses a technology in which the stoppers 54 and 54 are formed in the bearing outer ring 53 so as to prevent the outer peripheral side 52b of the foil 52 from being displaced to protrude in the axial direction.
[Patent Document 1] Japanese Patent Application Laid-Open No. S63-47520

In the conventional foil bearing apparatus 50, it is possible to prevent the axial displacement of the outer peripheral side 52b of the foil 52, but it is not possible to prevent the axial displacement of the inner peripheral side 52a of the foil 52. The inner peripheral side 52a of the foil 52 corresponds to a position contacting with the rotation side (rotational shaft 51) and a surface forming an air layer. For this reason, when the inner peripheral side 52a of the foil 52 is displaced to protrude in the axial direction, the appropriate function of the bearing is disturbed, which may cause various problems (an increase in friction resistance at a bearing position, a damage of the rotational shaft 51, and the like).

### SUMMARY OF THE INVENTION

Therefore, the invention is contrived to solve the above-described problems, and an object of the invention is to provide a foil bearing apparatus capable of preventing an axial displacement of an inner peripheral side of a foil.

According to the invention of claim 1, there is provided a foil bearing apparatus including: a rotational shaft; a foil which is disposed in the outer periphery of the rotational shaft; and a bearing outer ring which is disposed in the outer periphery of the foil, wherein a foil displacement regulating portion is provided so as to regulate an axial displacement of the inner peripheral side of the foil.

According to the invention of claim 2, in the foil bearing apparatus of claim 1, the foil bearing apparatus further includes a bearing inner ring which is fixed to the outer periphery of the rotational shaft and supports the inner peripheral side of the foil, and the foil displacement regulating portion is formed in the bearing inner ring.

According to the invention of claim 3, in the foil bearing apparatus of claim 1, the foil bearing apparatus further includes a bearing inner ring which is fixed to the outer periphery of the rotational shaft and supports the inner peripheral side of the foil, the foil displacement regulating portion is formed in both outsides of the foil, and the foil displacement regulating portions are respectively formed in the rotational shaft and the bearing inner ring.

According to the invention of claim 4, in the foil bearing apparatus of claim 1, the foil displacement regulating portion is formed in the rotational shaft.

In the invention according to claim 1, when the inner peripheral side of the foil is about to be displaced in the axial direction by the disturbance or the like, the axial displacement of the inner peripheral side of the foil is regulated by the foil displacement regulating portion. Accordingly, it is possible to prevent a problem caused by the axial displacement of the inner peripheral side of the foil.

In the invention according to claim 2, in addition to the advantage of the invention according to claim 1, since the inner peripheral side of the foil contacts with the bearing inner ring when the rotation is stopped, but does not contact with the rotational shaft, the rotational shaft is not damaged by the interference with the foil. Accordingly, a member which may be damaged by the interference with the foil is the bearing inner ring, the exchange workability of the bearing inner ring is good, and the exchange cost thereof is low compared with the case of exchanging the rotational shaft.

Further, in the foil bearing apparatus, the assembling workability is good compared with the conventional example. That is, in the conventional example, since a pair of stoppers is formed on the side of the bearing outer ring, the foil is disposed on the inner peripheral surface of the bearing outer ring. Subsequently, a conical jig of which large diameter side has the same diameter as that of the rotational shaft is attached to the end surface of the rotational shaft. Subsequently, the bearing outer ring and the foil are inserted into the rotational shaft from a small diameter side of the conical jig. Since the foil may be deviated to protrude during the inserting process, the assembling workability is poor. On the contrary, in the embodiment, since the bearing inner ring is provided with the foil displacement regulating portion, the foil is temporarily assembled at the outer periphery of the bearing inner ring, and an operator inserts the bearing outer ring while pressing the foil toward the bearing inner ring so as to minimize the maximum outer diameter. Since it is possible to press the foil by using a finger even when the outer diameter of the bearing inner ring is small, the assembling workability is good.

In the conventional example, since it is necessary to attach the jig to the end surface of the rotational shaft in the assembling process, the shape of the end surface of the rotational shaft is limited. On the contrary, in the embodiment, since it is not necessary to use the jig in the assembling process, the shape of the end surface of the rotational shaft is not limited.

In the invention according to claim 3, in addition to the advantage of the invention according to claim 1, since the inner peripheral side of the foil contacts with the bearing inner ring when the rotation is stopped, but does not contact with the rotational shaft, it is possible to maximally prevent the rotational shaft from being damaged by the interference with the foil. Accordingly, a member which may be damaged by the interference with the foil is the bearing inner ring in most of cases, the exchange workability of the bearing inner ring is good, and the exchange cost thereof is low compared with the case of exchanging the rotational shaft.

Further, in the foil bearing apparatus, the assembling workability is good compared with the conventional example due to the same reason as that of the invention according to claim 1.

In the invention according to claim 4, in addition to the advantage of the invention according to claim 1, the number of components does not increase.

Furthermore, in the foil bearing apparatus, the assembling workability is good compared with the conventional example due to the same reason as that of the invention according to claim 1.

### BRIEF DESCRIPTION OF THE DRAWINGS

Fig. 1 is a sectional view showing a conventional foil bearing apparatus.
Fig. 2 is a sectional view showing the foil bearing apparatus according to the first embodiment of the invention.
Fig. 3 is a sectional view taken along the line A-A in Fig. 2 according to the first embodiment of the invention.
Fig. 4 is a sectional view showing the foil bearing apparatus according to the second embodiment of the invention.
Fig. 5 is a sectional view showing the foil bearing apparatus according to the third embodiment of the invention.

### DESCRIPTION OF THE PREFERRED EMBODIMENT

Hereinafter, the exemplary embodiments of the invention will be described with reference to the drawings.

### First Embodiment

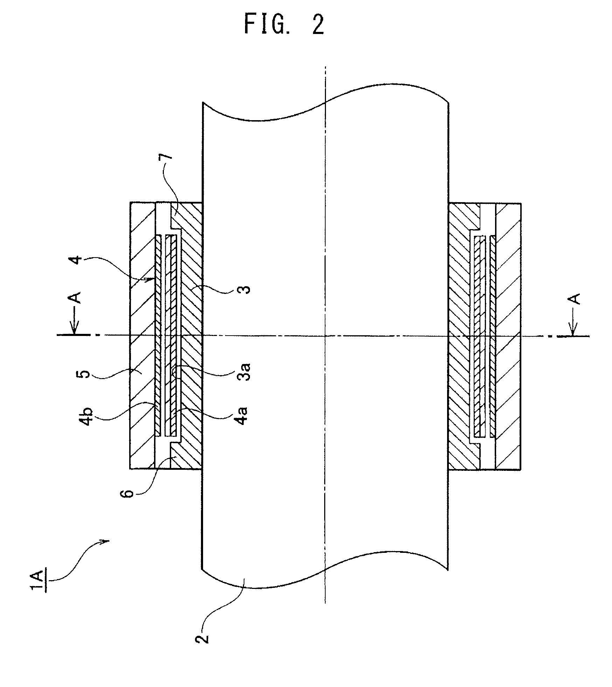

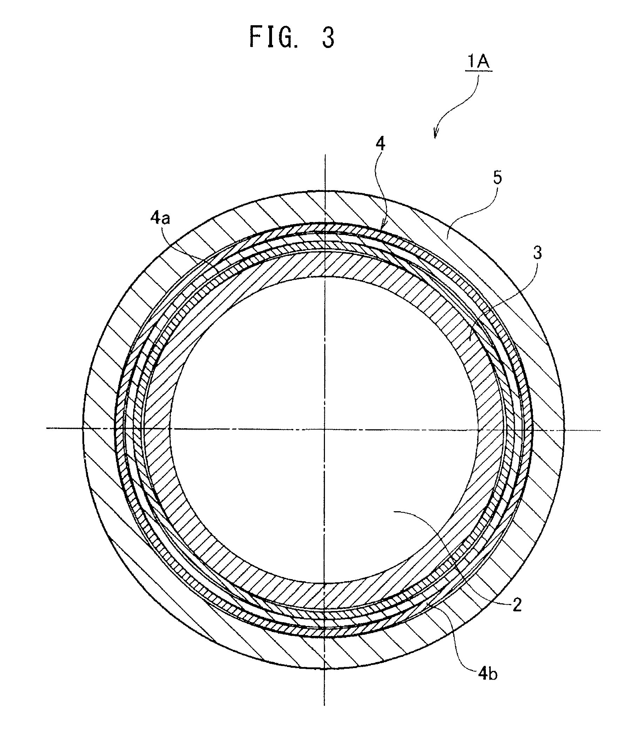

Figs. 2 and 3 show the first embodiment of the invention. Fig. 2 is a sectional view showing a foil bearing apparatus, and Fig. 3 is a sectional view taken along the line A-A in Fig. 2.

As shown in Figs. 2 and 3, a foil bearing apparatus 1A includes a rotational shaft 2 which is rotated at a high speed by driving means (not shown); a bearing inner ring 3 which is pressed into the outer periphery of the rotational shaft 2; a foil 4 which is disposed in the outer periphery of the bearing inner ring 3; and a bearing outer ring 5 which is disposed in the outer periphery of the foil 4.

The bearing inner ring 3 includes an outer peripheral surface 3a which comes into contact with an inner peripheral side 4a of the foil 4; and a pair of foil displacement regulating portions 6 and 7 which protrudes outward more than the outer peripheral surface 3a.

A width between the pair of foil displacement regulating portions 6 and 7 is set to be slightly wider than that of the foil 4. Each of the foil displacement regulating portions 6 and 7 is set to have a height capable of regulating the axial displacement of the inner peripheral side 4a of the foil 4.

The foil 4 is a thin metallic film, and may have various structures. As a detailed example, the foil 4 may be made by laminating a flat foil on a wave-form-shaped foil, or made by winding one sheet of foil onto a shaft plural times.

The bearing outer ring 5 is formed in a cylindrical shape, and the inner peripheral surface thereof comes into contact with the outer peripheral side 4b of the foil 4. The bearing outer ring 5 is fitted into, for example, a housing (not shown), which is a fixed portion relative to the rotational shaft 2, so as to have a gap therebetween, and is held by a rotation pin or the like so as not to be rotated.

In the above-described configuration, when the rotational shaft 2 is rotated, an air layer is formed between the bearing inner ring 3 and the foil 4. By using the air layer as a lubricating layer, the foil bearing apparatus 1A rotatably supports the rotational shaft without using oil. In addition, when the inner peripheral side 4a of the foil 4 is about to be displaced in the axial direction by the disturbance or the like, both axial displacements of the inner peripheral side 4a of the foil 4 are regulated by the pair of foil displacement regulating portions 6 and 7. Accordingly, it is possible to prevent such problems that the friction resistance at the bearing position increases due to the axial displacement of the inner peripheral side 4a of the foil 4, and the rotational shaft 2 is damaged.

In the first embodiment, since the inner peripheral side 4a of the foil 4 contacts with the bearing inner ring 3, but does not contact with the rotational shaft 2, the rotational shaft 2 is not damaged by the interference with the foil 4. Accordingly, a member which is damaged by the interference with the foil 4 is the bearing inner ring 3, the exchange workability of the bearing inner ring 3 is good, and the exchange cost thereof is low compared with the case of exchanging the rotational shaft 2.

Further, in the foil bearing apparatus 1A according to the first embodiment, the assembling workability is good compared with the conventional example. That is, in the conventional example, since a pair of stoppers is formed on the side of the bearing outer ring, the foil is disposed on the inner peripheral surface of the bearing outer ring. Subsequently, a conical jig of which large diameter side has the same diameter as that of the rotational shaft is attached to the end surface of the rotational shaft. Subsequently, the bearing outer ring and the foil are inserted into the rotational shaft from a small diameter side of the conical jig. Since the foil may be deviated to protrude during the inserting process, the assembling workability is poor. On the contrary, in the first embodiment, since the bearing inner ring 3 is provided with the foil displacement regulating portions 6 and 7, the foil 4 is temporarily assembled at the outer peripheral surface 3a of the bearing inner ring 3, and an operator inserts the bearing outer ring 5 while pressing the foil 4 toward the bearing inner ring 3 so as to minimize the maximum outer diameter. Since it is possible to press the foil 4 by using a finger even when the outer diameter of the bearing inner ring 3 is small, the assembling workability is good.

In the conventional example, since it is necessary to attach the jig to the end surface of the rotational shaft in the assembling process, the shape of the end surface of the rotational shaft is limited. On the contrary, in the first embodiment, since it is not necessary to use the jig in the assembling process, the shape of the end surface of the rotational shaft 2 is not limited.

Further, in the first embodiment, the surfaces of the bearing inner ring 3 and the bearing outer ring 5 which may contact with the foil 4 may be coated with a fluorine resin or the like so as to improve the damage resistance.

### Second Embodiment

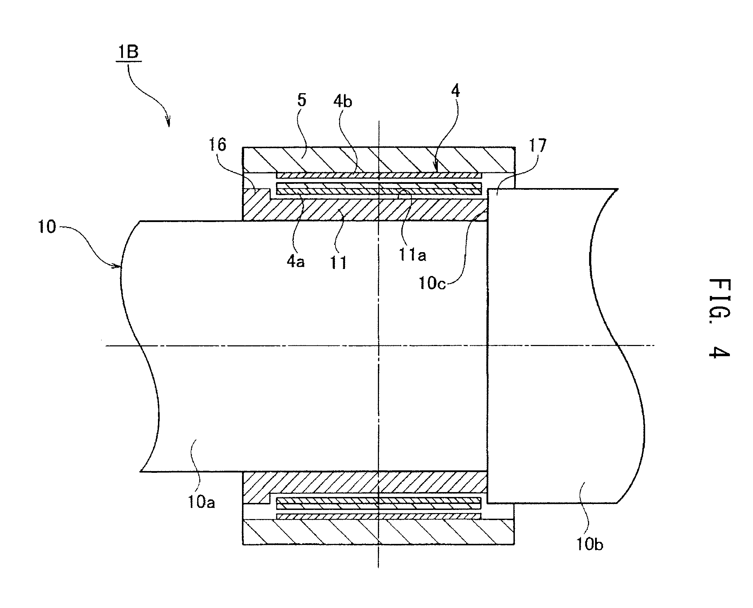

Fig. 4 is a sectional view showing the foil bearing apparatus according to the second embodiment of the invention.

As shown in Fig. 4, a foil bearing apparatus 1B includes a rotational shaft 10 which is rotated at a high speed by driving means (not shown); a bearing inner ring 11 which is pressed into the outer periphery of the rotational shaft 10; a foil 4 which is disposed in the outer periphery of the bearing inner ring 11; and a bearing outer ring 5 which is disposed in the outer periphery of the foil 4.

The rotational shaft 10 is formed as a stepped shaft including a small diameter portion 10a and a large diameter portion 10b. A stepped surface 10c is formed in the boundary between the small diameter portion 10a and the large diameter portion 10b.

The bearing inner ring 11 is pressed into the small diameter portion 10a of the rotational shaft 10. The bearing inner ring 11 includes an outer peripheral surface 11a which comes into contact with the inner peripheral side 4a of the foil 4, and one foil displacement regulation portion 16 which protrudes from one end of the outer peripheral surface 11a. The pressed front end surface of the bearing inner ring 11 comes into contact with the stepped surface 10c between the small diameter portion 10a and the large diameter portion 10b. The diameter of the outer peripheral surface 11a of the bearing inner ring 11 is set to be smaller than that of the large diameter portion 10b of the rotational shaft 10. Accordingly, the end of the large diameter portion 10b of the rotational shaft 10 is formed as the other foil displacement regulation portion 17.

That is, in the second embodiment, the foil displacement regulating portions 16 and 17 are respectively provided in the bearing inner ring 11 and the rotational shaft 10.

Since the foil 4 is the same as that of the first embodiment, the description thereof will be omitted.

Since the bearing outer ring 5 is the same as that of the first embodiment, the description thereof will be omitted.

Even in the second embodiment, both axial displacements of the inner peripheral side 4a of the foil 4 are regulated by the pair of foil displacement regulating portions 16 and 17 by the same effect as that of the first embodiment. Accordingly, it is possible to prevent a problem caused by the axial displacement of the inner peripheral side 4a of the foil 4.

In the second embodiment, since the inner peripheral side 4a of the foil 4 contacts with the bearing inner ring 11, but does not contact with the rotational shaft 10 when the rotation is stopped, it is possible to maximally prevent the rotational shaft 10 from being damaged by the interference with the foil 4. Accordingly, a member which is damaged by the interference with the foil 4 is the bearing inner ring 11 in most of cases, the exchange workability of the bearing inner ring 11 is good, and the exchange cost thereof is low compared with the case of exchanging the rotational shaft 10.

Additionally, even in the foil bearing apparatus 1B according to the second embodiment, the assembling workability is good compared with the conventional example. That is, in the second embodiment, since the bearing inner ring 11 and the rotational shaft 10 are provided with the foil regulating portions 16 and 17, the foil 4 is temporarily assembled at the outer peripheral surface 11a of the bearing inner ring 11, and the operator inserts the bearing outer ring 5 while pressing the foil 4 toward the bearing inner ring 11 so as to minimize the maximum outer diameter. Since it is possible to press the foil 4 by using a finger even when the outer diameter of the bearing inner ring 11 is small, the assembling workability is good.

Further, in the second embodiment, the surfaces of the rotational shaft 10, the bearing inner ring 11, and the bearing outer ring 5 which may contact with the foil 4 may be subjected to coating using a fluorine resin or the like so as to improve the damage resistance.

### Third Embodiment

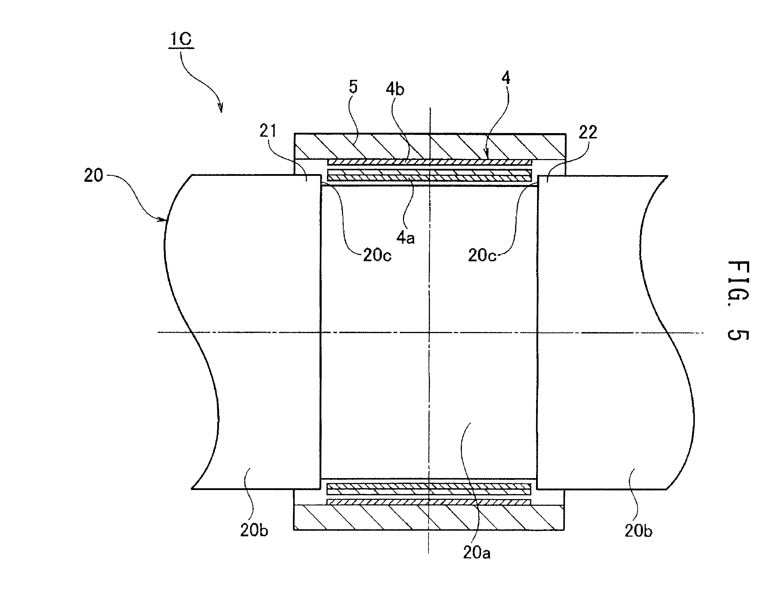

Fig. 5 is a sectional view showing the foil bearing apparatus according to the third embodiment of the invention.

As shown in Fig. 5, a foil bearing apparatus 1C includes a rotational shaft 20 which is rotated at a high speed by driving means (not shown); a foil 4 which is disposed in the outer periphery of the rotational shaft 20; and a bearing outer ring 5 which is disposed in the outer periphery of the foil 4.

The rotational shaft 20 is formed as a shaft provided with a groove formed by a small diameter portion 20a and both-side large diameter portions 20b and 20b. Stepped surfaces 20c and 20c are respectively formed in the boundaries between the small diameter portion 20a and both-side large diameter portions 20b and 20b.

The foil 4 is disposed in the outer periphery of the small diameter portion 20a of the rotational shaft 20. Accordingly, the large diameter portions 20b and 20b of the rotational shaft 20 are respectively disposed on the outside of both ends of the foil 4. The ends of both-side large diameter portions 20b and 20b are formed as a pair of foil displacement regulating portions 21 and 22. Since the configuration of the foil 4 is the same as that of the first embodiment, the description thereof will be omitted.

Since the configuration of the bearing outer ring 5 is the same as that of the first embodiment, the description thereof will be omitted.

Even in the third embodiment, both axial displacements of the inner peripheral side 4a of the foil 4 are regulated by the pair of foil displacement regulating portions 21 and 22 by the same effect as that of the first embodiment. Accordingly, it is possible to prevent a problem caused by the axial displacement of the inner peripheral side 4a of the foil 4.

In the third embodiment, since the foil bearing apparatus 1C includes the rotational shaft 20, the foil 4, and the bearing outer ring 5, it is possible to prevent the axial displacement of the inner peripheral side 4a of the foil 4 without increasing the number of components compared with the conventional example.

Further, even in the foil bearing apparatus 1C according to the third embodiment, the assembling workability is good compared with the conventional example. That is, in the third embodiment, since the rotational shaft 20 is provided with the foil regulating portions 21 and 22, the foil 4 is temporarily assembled at the outer periphery of the small diameter portion 20a of the rotational shaft 20, and the operator inserts the bearing outer ring 5 while pressing the foil 4 toward the rotational shaft 20 so as to minimize the maximum outer diameter. Since it is possible to press the foil 4 by using a finger even when the outer diameter of the rotational shaft 20 is small, the assembling workability is good.

Furthermore, in the third embodiment, the surfaces of the rotational shaft 20 and the bearing outer ring 5 which may contact with the foil 4 may be coated with a fluorine resin or the like so as to improve the damage resistance.

In the above-described embodiments, as in the conventional example, the bearing outer ring 5 may be, of course, provided with the foil outside displacement regulation portion which regulates the axial displacement of the outer peripheral side 4b of the foil 4. When the foil outside displacement regulation portion is provided, it is possible to prevent the axial displacement of the outer peripheral side 4b as well as the inner peripheral side 4a of the foil 4.

Further, as described above, the foil 4 may be of various types. That is, there are a multiple wound foil in which an elongate band-shaped plate member is wound multiple times, a bump foil which is formed by a top foil and a bump foil, a leaf foil which is formed by plural foil pieces, and the like. Of course, the invention may be applied to any foil of them.

## Claims

1. A foil bearing apparatus comprising:
a rotational shaft;
a foil which is disposed in the outer periphery of the rotational shaft; and
a bearing outer ring which is disposed in the outer periphery of the foil,
wherein a foil displacement regulating portion is provided so as to regulate an axial displacement of the inner peripheral side of the foil.

2. The foil bearing apparatus according to claim 1, further comprising:
a bearing inner ring which is fixed to the outer periphery of the rotational shaft and supports the inner peripheral side of the foil,
wherein the foil displacement regulating portion is formed in the bearing inner ring.

3. The foil bearing apparatus according to claim 1, further comprising:
a bearing inner ring which is fixed to the outer periphery of the rotational shaft and supports the inner peripheral side of the foil,
wherein the foil displacement regulating portion is formed in both outsides of the foil, and
wherein the foil displacement regulating portions are respectively formed in the rotational shaft and the bearing inner ring.

4. The foil bearing apparatus according to claim 1,
wherein the foil displacement regulating portion is formed in the rotational shaft.
